# EUROPEAN PATENT SPECIFICATION

(11) **EP 4 252 221 B1**
(45) Date of publication and mention of the grant of the patent: **29.04.2026**
(21) Application number: 21848215.6
(22) Date of filing: 16.12.2021
(51) Int. Cl.: G08G 5/00, G08G 5/32, G08G 5/34, G08G 5/54, G08G 5/55, G08G 5/56, G08G 5/74, G08G 5/80

(54) **MANAGING A FLEET OF AUTONOMOUS VEHICLES BASED ON COLLECTED INFORMATION**
VERWALTUNG EINER FLOTTE VON AUTONOMEN FAHRZEUGEN AUF BASIS GESAMMELTER INFORMATIONEN
GESTION D'UNE FLOTTE DE VÉHICULES AUTONOMES SUR LA BASE D'INFORMATIONS COLLECTÉES

(30) Priority: 15.01.2021 US 202117151057
(43) Date of publication of application: 04.10.2023
(73) Proprietor: Wing Aviation LLC, Palo Alto, CA 94304 (US)
(72) Inventor: TELLES, Bernardo, Malta, Leite, Mountain View, California 94043 (US); NEGRON, Reinaldo, Jr., Mountain View, California 94043 (US)
(74) Representative: Anderson, Oliver Ben
(86) International application number: PCT/US2021/063902
(87) International publication number: WO 2022/154935

(56) References cited:
- US-A1- 2017 178 520
- US-A1- 2018 181 125
- US-A1- 2018 204 469
- US-A1- 2019 114 925
- US-A1- 2019 317 530
- US-A1- 2019 355 263
- US-A1- 2020 020 236
- US-A1- 2020 380 873

## Description

### TECHNICAL FIELD

This disclosure relates generally to autonomous vehicles, and in particular but not exclusively, relates to collecting and/or providing information for the control of autonomous vehicles.

### BACKGROUND

As autonomous vehicles, including but not limited to unmanned aerial vehicles (UAVs), become more prevalent, it is increasingly desired to manage operations of fleets of autonomous vehicles. One common management task for autonomous vehicles is establishing restricted areas in which autonomous vehicles are not to operate. When operating a fleet of autonomous vehicles over a large and dynamic geographic area, it is increasingly difficult to have adequate information on hand to ensure that a desired level of protection can be achieved by a restricted area without having to restrict an overly large area around the desired location to be protected.

US 2019/355263 A1 describes obstruction detection and management systems and methods that include, in an Air Traffic Control (ATC) system including one or more servers communicatively coupled to a plurality of passenger drones via one or more wireless networks, receiving passenger drone data from a plurality of passenger drones, wherein the passenger drone data comprises operational data for the plurality of passenger drones and obstruction data from one or more passenger drones; and updating an obstruction database based on the obstruction data.

US 2020/020236 A1 describes a method for supporting flight restriction of aircraft that includes generating a flight restriction region using one or more three-dimensional elementary flight restriction volumes, and controlling the aircraft according to the flight restriction region.

US 2019/317530 A1 describes a method for controlling flight of an unmanned aerial vehicle (UAV) that includes obtaining information about a location of an object of interest, and calculating, during operation of the UAV, a flight-restricted distance for the UAV to maintain relative to the object of interest.

US 2020/380873 A1 describes a method and a corresponding system for preventing collisions between registered aircraft and of registered aircraft with unregistered aircraft and with other objects, in particular flying objects in an airspace.

US 2018/181125 A1 describes on-ground vehicle collision avoidance utilizing unmanned aerial vehicles.

US 2017/178520 describes systems and methods for on-ground vehicle collision avoidance utilizing shared vehicle hazard sensor data.

US 2018/204469 discloses a method for determining flight path for unmanned aerial vehicle around physical structure.

### SUMMARY

The matter for protection is defined by the claims.

According to a first aspect of the invention, a method of optimizing a restricted area for autonomous vehicle operations is provided according to appended claim 1.

According to a second aspect of the invention, a non-transitory computer-readable medium is is provided according to appended claim 12.

### BRIEF DESCRIPTION OF THE SEVERAL VIEWS OF THE DRAWINGS

Non-limiting and non-exhaustive embodiments of the invention are described with reference to the following figures, wherein like reference numerals refer to like parts throughout the various views unless otherwise specified. Not all instances of an element are necessarily labeled so as not to clutter the drawings where appropriate. The drawings are not necessarily to scale, emphasis instead being placed upon illustrating the principles being described. To easily identify the discussion of any particular element or act, the most significant digit or digits in a reference number refer to the figure number in which that element is first introduced.
FIG. 1 and FIG. 2 illustrate a non-limiting example embodiment of an aerial vehicle or UAV 100, in accordance with various aspects of the present disclosure.
FIG. 3 is a block diagram that illustrates a non-limiting example embodiment of an autonomous vehicle according to various aspects of the present disclosure.
FIG. 4 is a block diagram that illustrates a non-limiting example embodiment of a fleet management system according to various aspects of the present disclosure.
FIG. 5 is a flowchart that illustrates a non-limiting example embodiment of a method of determining a restricted area for vehicle operations according to various aspects of the present disclosure.
FIG. 6A - FIG. 6D are schematic drawings that illustrate a geographic area in which a restricted area is to be established according to various aspects of the present disclosure.
FIG. 7 is a flowchart that illustrates a non-limiting example embodiment of a procedure for collecting information associated with a general restricted area according to various aspects of the present disclosure.
FIG. 8 is a flowchart that illustrates a non-limiting example embodiment of a method of controlling an autonomous vehicle according to various aspects of the present disclosure.

### DETAILED DESCRIPTION

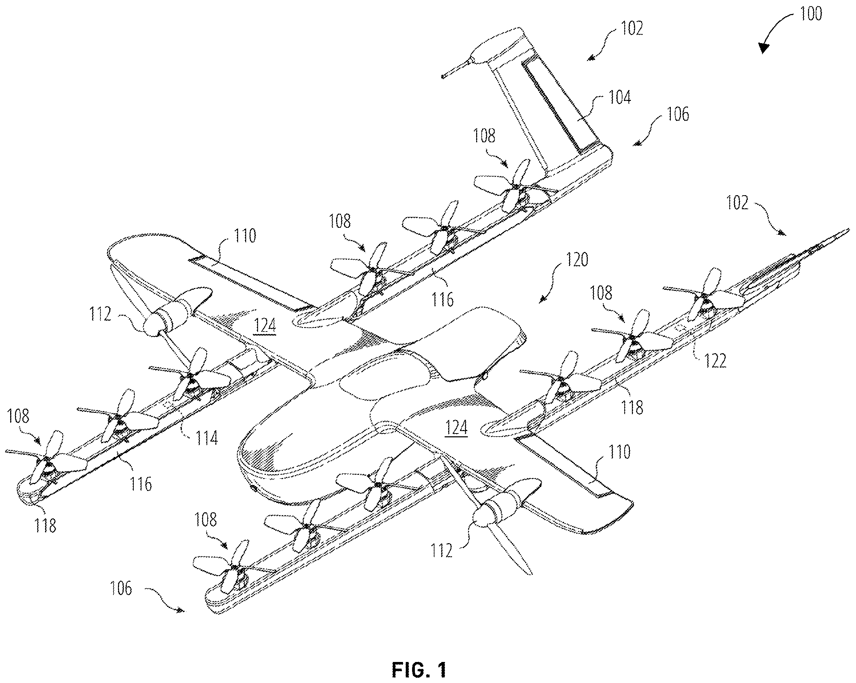

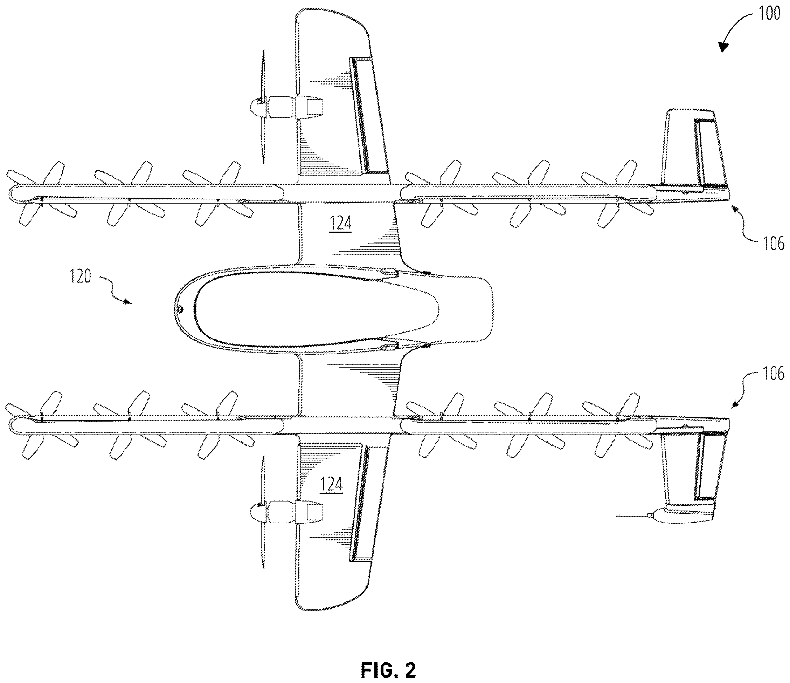

FIG. 1 and FIG. 2 illustrate a non-limiting example embodiment of an aerial vehicle or UAV 100, in accordance with various aspects of the present disclosure. The illustrated embodiment of UAV 100 is a vertical takeoff and landing (VTOL) unmanned aerial vehicle (UAV) that includes separate propulsion units 112 and propulsion units 108 for providing horizontal and vertical propulsion, respectively. UAV 100 is a fixed-wing aerial vehicle, which as the name implies, has a wing assembly 124 that can generate lift based on the wing shape and the vehicle's forward airspeed when propelled horizontally by propulsion units 112. FIG. 1 is a perspective top view illustration of UAV 100 while FIG. 2 is a bottom side plan view illustration of UAV 100.

The illustrated embodiment of UAV 100 includes a fuselage 120. In one embodiment, fuselage 120 is modular and includes a battery module, an avionics module, and a mission payload module. These modules are detachable from each other and mechanically securable to each other to contiguously form at least a portion of the fuselage 120 or UAV main body.

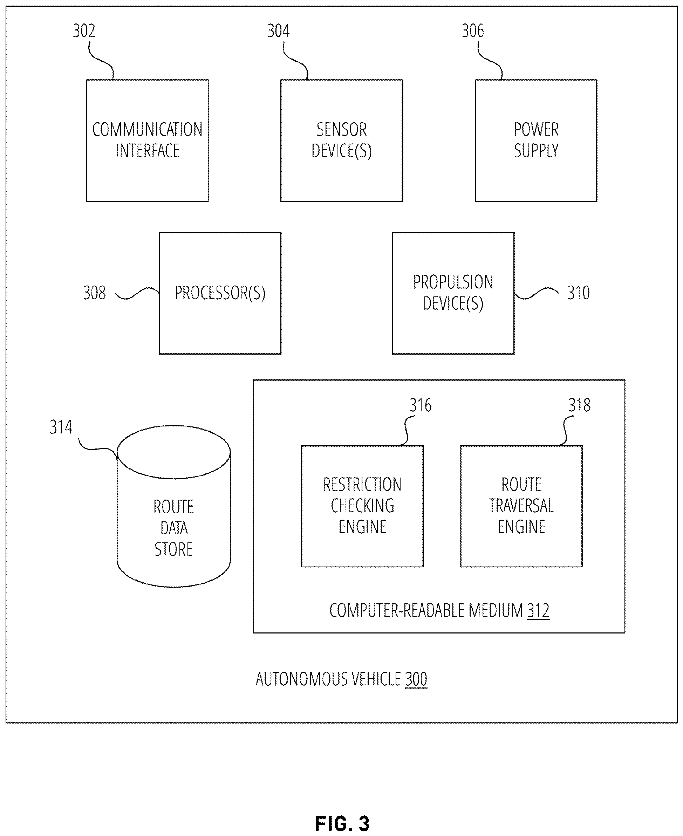

The battery module includes a cavity for housing one or more batteries for powering UAV 100. The avionics module houses flight control circuitry of UAV 100, which may include a processor and memory, communication electronics and antennas (e.g., cellular transceiver, Wi-Fi transceiver, etc.), and various sensors (e.g., global positioning sensor, an inertial measurement unit (IMU), a magnetic compass, etc.). The mission payload module houses equipment associated with a mission of UAV 100. For example, the mission payload module may include a payload actuator for holding and releasing an externally attached payload. In another embodiment, the mission payload module may include a camera/sensor equipment holder for carrying camera/sensor equipment (e.g., camera, lenses, radar, LIDAR, pollution monitoring sensors, weather monitoring sensors, etc.). Other components that may be carried by some embodiments of the UAV 100 are illustrated in FIG. 3.

The illustrated embodiment of UAV 100 further includes horizontal propulsion units 112 positioned on wing assembly 124, which can each include a motor, shaft, motor mount, and propeller, for propelling UAV 100. The illustrated embodiment of UAV 100 includes two boom assemblies 106 that secure to wing assembly 124.

The illustrated embodiments of boom assemblies 106 each include a boom housing 118 in which a boom is disposed, vertical propulsion units 108, printed circuit boards 116, and stabilizers 102. Vertical propulsion units 108 can each include a motor, shaft, motor mounts, and propeller, for providing vertical propulsion. Vertical propulsion units 108 may be used during a hover mode where UAV 100 is descending (e.g., to a delivery location) or ascending (e.g., following a delivery). Stabilizers 102 (or fins) may be included with UAV 100 to stabilize the UAV's yaw (left or right turns) during flight. In some embodiments, UAV 100 may be configured to function as a glider. To do so, UAV 100 may power off its propulsion units and glide for a period of time.

During flight, UAV 100 may control the direction and/or speed of its movement by controlling its pitch, roll, yaw, and/or altitude. For example, the stabilizers 102 may include one or more rudders 104 for controlling the UAV's yaw, and wing assembly 124 may include elevators for controlling the UAV's pitch and/or ailerons 110 for controlling the UAV's roll. As another example, increasing or decreasing the speed of all the propellers simultaneously can result in UAV 100 increasing or decreasing its altitude, respectively. The UAV 100 may also include components for sensing the environment around the UAV 100, including but not limited to audio sensor 122 and audio sensor 114. Further examples of sensor devices are illustrated in FIG. 3 and described below.

Many variations on the illustrated fixed-wing aerial vehicle are possible. For instance, aerial vehicles with more wings (e.g., an "x-wing" configuration with four wings), are also possible. Although FIG. 1 and FIG. 2 illustrate one wing assembly 124, two boom assemblies 106, two horizontal propulsion units 112, and six vertical propulsion units 108 per boom assembly 106, it should be appreciated that other variants of UAV 100 may be implemented with more or fewer of these components.

It should be understood that references herein to an "unmanned" aerial vehicle or UAV can apply equally to autonomous and semi-autonomous aerial vehicles. In a fully autonomous implementation, all functionality of the aerial vehicle is automated; e.g., pre-programmed or controlled via real-time computer functionality that responds to input from various sensors and/or pre-determined information. In a semi-autonomous implementation, some functions of an aerial vehicle may be controlled by a human operator, while other functions are carried out autonomously. Further, in some embodiments, a UAV may be configured to allow a remote operator to take over functions that can otherwise be controlled autonomously by the UAV. Yet further, a given type of function may be controlled remotely at one level of abstraction and performed autonomously at another level of abstraction. For example, a remote operator may control high level navigation decisions for a UAV, such as specifying that the UAV should travel from one location to another (e.g., from a warehouse in a suburban area to a delivery address in a nearby city), while the UAVs navigation system autonomously controls more fine-grained navigation decisions, such as the specific route to take between the two locations, specific flight controls to achieve the route and avoid obstacles while navigating the route, and so on.

It should also be understood that, while a UAV 100 is illustrated and some of the discussion herein relates to aircraft, in some embodiments other types of autonomous vehicles may be used, including but not limited to wheeled passenger vehicles such as cars and vans; wheeled cargo vehicles such as trucks; wheeled unmanned vehicles; and robots. Further, while the discussion herein primarily relates to controlling one or more autonomous vehicles, in some embodiments the present disclosure may be used to establish restricted areas for manned vehicles as well as for autonomous vehicles.

FIG. 3 is a block diagram that illustrates a non-limiting example embodiment of an autonomous vehicle 300 according to various aspects of the present disclosure. The autonomous vehicle 300 is configured to receive routes from a. In some embodiments, the autonomous vehicle 300 is an aircraft. In other embodiments, any other type of autonomous vehicle 300 capable of navigating along a route, such as a wheeled vehicle, may be used. As shown, the autonomous vehicle 300 includes a communication interface 302, one or more sensor devices 304, a power supply 306, one or more processors 308, one or more propulsion devices 310, and a computer-readable medium 312.

In some embodiments, the communication interface 302 includes hardware and software to enable any suitable communication technology for communicating with a fleet management system. In some embodiments, the communication interface 302 includes multiple communication interfaces, each for use in appropriate circumstances. For example, the communication interface 302 may include a long-range wireless interface such as a 4G or LTE interface, or any other type of long-range wireless interface (e.g., 2G, 3G, 5G, or WiMAX), to be used to communicate with the fleet management system while traversing a route. The communication interface 302 may also include a medium-range wireless interface such as a Wi-Fi interface to be used when the autonomous vehicle 300 is at an area near a start location or an endpoint where Wi-Fi coverage is available. The communication interface 302 may also include a short-range wireless interface such as a Bluetooth interface to be used when the autonomous vehicle 300 is in a maintenance location or is otherwise stationary and waiting to be assigned a route. The communication interface 302 may also include a wired interface, such as an Ethernet interface or a USB interface, which may also be used when the autonomous vehicle 300 is in a maintenance location or is otherwise stationary and waiting to be assigned a route.

In some embodiments, the sensor devices 304 include one or more vehicle state sensor devices that are configured to detect states of various components of the autonomous vehicle 300, and to transmit signals representing those states to other components of the autonomous vehicle 300. Some non-limiting examples of such sensor devices 304 include a battery state sensor, a propulsion device health sensor, an accelerometer, and an attitude sensor. In some embodiments, the sensor devices 304 include one or more environmental sensor devices that are configured to detect information regarding the environment of the autonomous vehicle 300. Some non-limiting examples of such sensor devices 304 include visible light cameras, infrared cameras, LIDAR sensor devices, RADAR sensor devices, SONAR sensor devices, temperature sensors, altimeters, barometers, and positioning sensor devices (including but not limited to global navigation satellite system (GNSS) sensors).

In some embodiments, the power supply 306 may be any suitable device or system for storing and/or generating power. Some non-limiting examples of a power supply 306 include one or more batteries, one or more solar panels, a fuel tank, and combinations thereof. In some embodiments, the propulsion devices 310 may include any suitable devices for causing the autonomous vehicle 300 to travel along the path. For an aircraft, the propulsion devices 310 may include devices such as, but not limited to, one or more motors, one or more propellers, and one or more flight control surfaces. For a wheeled vehicle, the propulsion devices 310 may include devices such as, but not limited to, one or more motors, one or more wheels, and one or more steering mechanisms. In some embodiments, the processors 308 may include any type of computer processor capable of receiving signals from other components of the autonomous vehicle 300 and executing instructions stored on the computer-readable medium 312. In some embodiments, the computer-readable medium 312 may include one or more devices capable of storing information for access by the processor 308. In some embodiments, the computer-readable medium 312 may include one or more of a hard drive, a flash drive, an EEPROM, and combinations thereof.

As shown, the computer-readable medium 312 has stored thereon a route traversal engine 318 and a restriction checking engine 316. In some embodiments, the route traversal engine 318 is configured to cause the propulsion device 310 to propel the autonomous vehicle 300 through routes stored in the route data store 314. The route traversal engine 318 may use signals from sensor devices 304, such as GNSS sensor devices, vision-based navigation devices, accelerometers, LIDAR devices, and/or other devices that are not illustrated or described further herein, to assist in positioning and navigation as is typical for an autonomous vehicle 300. In some embodiments, the restriction checking engine 316 is configured to compare a current or predicted future position of the autonomous vehicle 300 to one or more restricted areas, and to cause the autonomous vehicle 300 to take a corrective action in response to determining that the current or predicted future position of the autonomous vehicle 300 is or will be within a restricted area.

As used herein, "engine" refers to logic embodied in hardware or software instructions, which can be written in one or more programming languages, including but not limited to C, C++, C#, COBOL, JAVA^{™}, PHP, Perl, HTML, CSS, JavaScript, VBScript, ASPX, Go, and Python. An engine may be compiled into executable programs or written in interpreted programming languages. Software engines may be callable from other engines or from themselves. Generally, the engines described herein refer to logical modules that can be merged with other engines, or can be divided into sub-engines. The engines can be implemented by logic stored in any type of computer-readable medium or computer storage device and be stored on and executed by one or more general purpose computers, thus creating a special purpose computer configured to provide the engine or the functionality thereof. The engines can be implemented by logic programmed into an application-specific integrated circuit (ASIC), a field-programmable gate array (FPGA), or another hardware device.

As used herein, "data store" refers to any suitable device configured to store data for access by a computing device. One example of a data store is a highly reliable, high-speed relational database management system (DBMS) executing on one or more computing devices and accessible over a high-speed network. Another example of a data store is a key-value store. However, any other suitable storage technique and/or device capable of quickly and reliably providing the stored data in response to queries may be used, and the computing device may be accessible locally instead of over a network, or may be provided as a cloud-based service. A data store may also include data stored in an organized manner on a computer-readable storage medium, such as a hard disk drive, a flash memory, RAM, ROM, or any other type of computer-readable storage medium. One of ordinary skill in the art will recognize that separate data stores described herein may be combined into a single data store, and/or a single data store described herein may be separated into multiple data stores, without departing from the scope of the present disclosure.

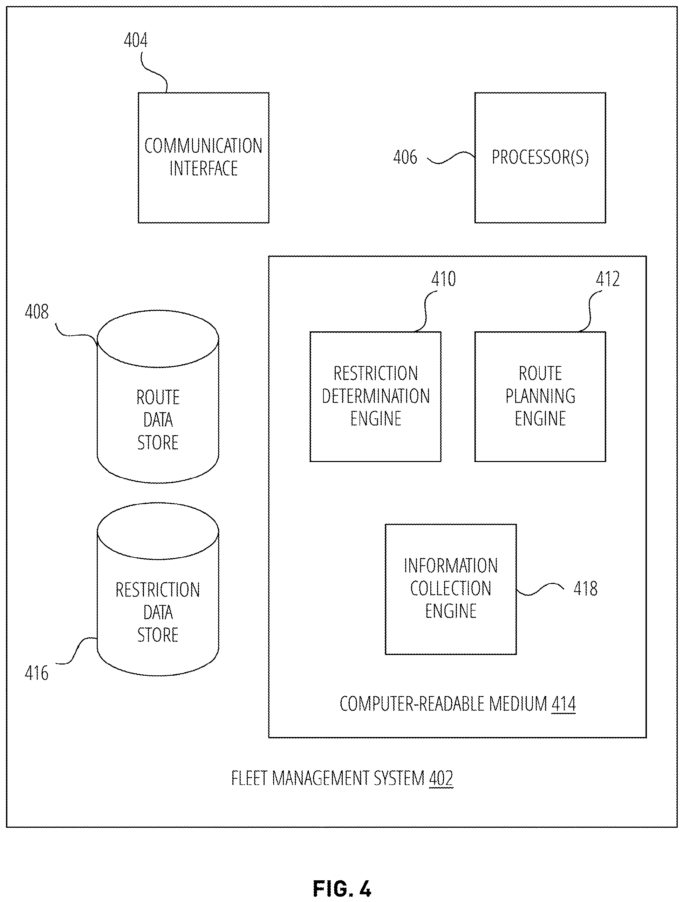

FIG. 4 is a block diagram that illustrates a non-limiting example embodiment of a fleet management system according to various aspects of the present disclosure. The fleet management system 402 may include any number of one or more suitable computing devices configured to collectively provide the functionality of the fleet management system 402, including but not limited to desktop computing devices, laptop computing devices, server computing devices, and computing devices of a cloud computing system. In some embodiments, each of the computing devices of the fleet management system 402 may have all of the components illustrated in FIG. 4. In some embodiments, some computing devices of the fleet management system 402 may have some (but not all) of the components illustrated in FIG. 4, while other computing devices of the fleet management system 402 may have other components illustrated in FIG. 4.

As shown, the fleet management system 402 includes a communication interface 404, one or more processors 406, and a computer-readable medium 414. In some embodiments, the processors 406 include any suitable type of general-purpose computer processor. In some embodiments, the processors 406 may include one or more specialpurpose computer processors or AI accelerators optimized for specific computing tasks, including but not limited to graphical processing units (GPUs), vision processing units (VPUs), and tensor processing units (TPUs). In some embodiments, the communication interface 404 includes hardware and/or software suitable for communication with a communication interface 302 as described above of the autonomous vehicles 300 in a fleet. In some embodiments, the communication interface 404 may also include hardware and/or software suitable for communicating with other computing systems via one or more of any wired or wireless technologies.

As shown, the computer-readable medium 414 has stored thereon logic for providing a restriction determination engine 410, a route planning engine 412, and an information collection engine 418. In some embodiments, the restriction determination engine 410 is configured to determine areas in which operation of autonomous vehicles 300 should not be allowed, and may be configured to transmit such areas to autonomous vehicles 300 and/or may be configured to store such areas in a restriction data store 416. In some embodiments, the route planning engine 412 is configured to plan routes for autonomous vehicles 300, to store the planned routes in a route data store 408, and to transmit the planned routes to autonomous vehicles 300. In some embodiments, the route planning engine 412 may take the restricted areas stored in the restriction data store 416 into account while planning routes. In some embodiments, the information collection engine 418 collects information from various sources to be provided to at least the restriction determination engine 410 for use in determining restricted areas. Further details regarding the operation of each of these components is provided below.

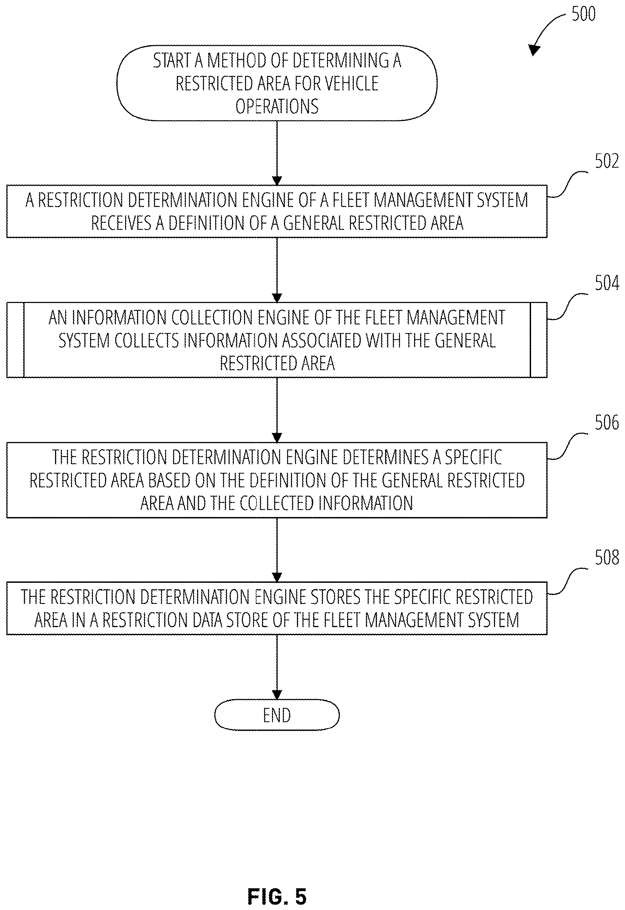

FIG. 5 is a flowchart that illustrates a non-limiting example embodiment of a method of determining a restricted area for vehicle operations according to various aspects of the present disclosure. In the method 500, a fleet management system 402 collects information in order to reduce the size of a restricted area from a general restricted area specified by a user (or another source) to a specific restricted area that both accomplishes a goal for the restriction and minimally impacts other operations of a fleet of autonomous vehicles.

From a start block, the method 500 proceeds to block 502, where a restriction determination engine 410 of a fleet management system 402 receives a definition of a general restricted area. The general restricted area may be defined in any regular or irregular two-dimensional or three-dimensional shape, including but not limited to regular shapes such as circles, squares, rectangles, polygons, spheres, cylinders, and prisms, and irregular shapes of all types.

In some embodiments, the general restricted area may be used to specify a rough area in which a restriction is desired, so that the fleet management system 402 may create a specific restricted area within the general restricted area to accomplish a goal of the desired restriction in a more tailored way after gathering additional information. The definition of the general restricted area may include a specification of how the general restricted area is to be tailored by the fleet management system 402.

The general restricted area specifies a general area (as a non-limiting example, a fairground) in which a structure or other feature to be avoided (as a non-limiting example, a ferris wheel) is or will be present. Though the structure to be avoided would be somewhere within the general restricted area, at the time of the definition of the general restricted area the exact location of the structure may not be known. Information may then be collected regarding the general restricted area to find the exact location of the structure, and the specific restricted area can be created based on the collected information (e.g., the specific restricted area may be limited to the actual footprint of the structure, plus a buffer, and may result in a specific restricted area smaller than the general restricted area).

As another example, the general restricted area may specify a general area (as a non-limiting example, a residential zone) through which autonomous vehicle operation is desired to be reduced by a certain percentage. Information may then be collected regarding the general restricted area to find specific portions of the general restricted area to which restrictions may be applied to minimally impact operations of a fleet of autonomous vehicles, and the specific portions may make up the specific restricted area.

In some embodiments, the restriction determination engine 410 may provide any suitable type of user interface that accepts input from a user to define the general restricted area. In some embodiments, the user interface may present a map, and may accept input of an outline, vertices, a center and a radius, or any other suitable input for defining a general restricted area within the map. In some embodiments, the user interface may accept input to define a two-dimensional general restricted area. In some embodiments, the user interface may accept input to define a three-dimensional general restricted area.

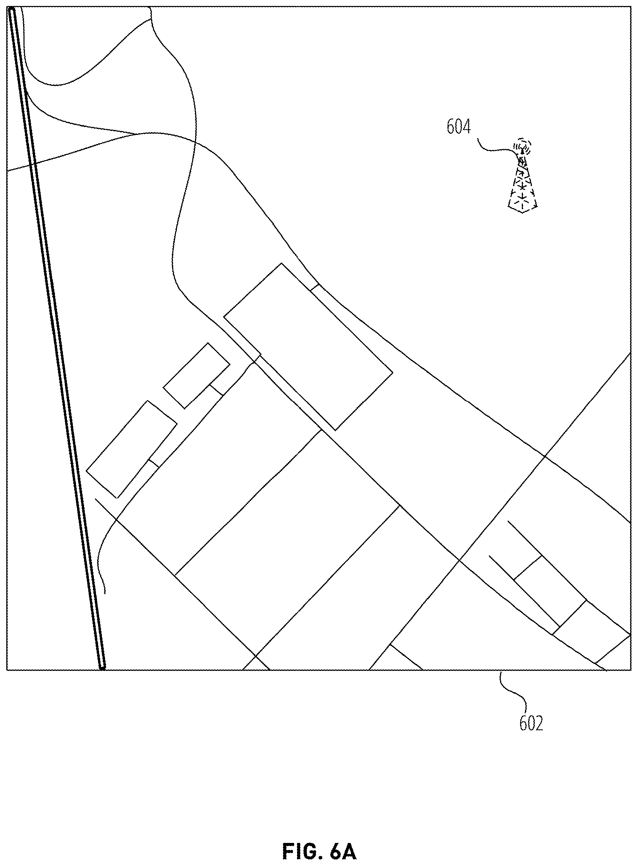

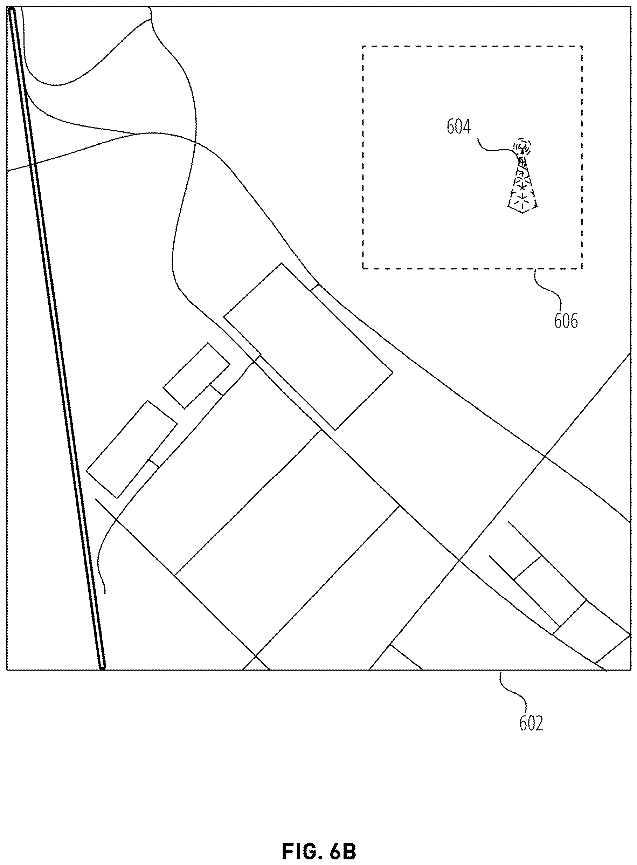

FIG. 6A - FIG. 6D are schematic drawings that illustrate a geographic area in which a restricted area is to be established according to various aspects of the present disclosure. In FIG. 6A, a geographic area 602 is shown. The view of the geographic area 602 shown in FIG. 6A may be an example of a map interface provided by the restriction determination engine 410 before the interface receives an input of a general restricted area. In the restriction determination engine 410 may have data that indicates that there is a structure 604 in the geographic area 602 near which autonomous vehicles should not be permitted. However, it is assumed for the sake of discussion that data representing the exact location of the structure 604 is not available for creation of a precise restricted area to protect the structure 604. In FIG. 6B, a user has submitted input (such as tapping the corners, drawing the outline, clicking-and-dragging, or other suitable input) on the interface, and a general restricted area 606 around the structure 604 is illustrated in the geographic area 602.

In some embodiments, additional attributes may be included in the definition of the general restricted area. For example, the definition of the general restricted area may include a start time for a restriction within the general restricted area and/or an end time for a restriction within the general restricted area. As another example, the definition of the general restricted area may include a specification of whether no traffic is allowed within the general restricted area, or whether only certain types of traffic are allowed within the general restricted area (e.g., only autonomous vehicles that meet one or more size, speed, or maneuverability thresholds; only autonomous vehicles serving specific purposes such as public safety; only allowed within the general restricted area for a threshold amount of time, etc.). As yet another example, the definition of the general restricted area may include an indication of a remedy to take if an autonomous vehicle inadvertently enters the general restricted area (or is within the general restricted area while it is created), including but not limited to landing as soon as possible or diverting course to leave the general restricted area. In some embodiments, the definition of the general restricted area may specify different remedies for different portions of the general restricted area, such as a low-impact remedy such as diverting course for an outer portion of the general restricted area, and a high-impact remedy such as landing as soon as possible for an inner portion of the general restricted area.

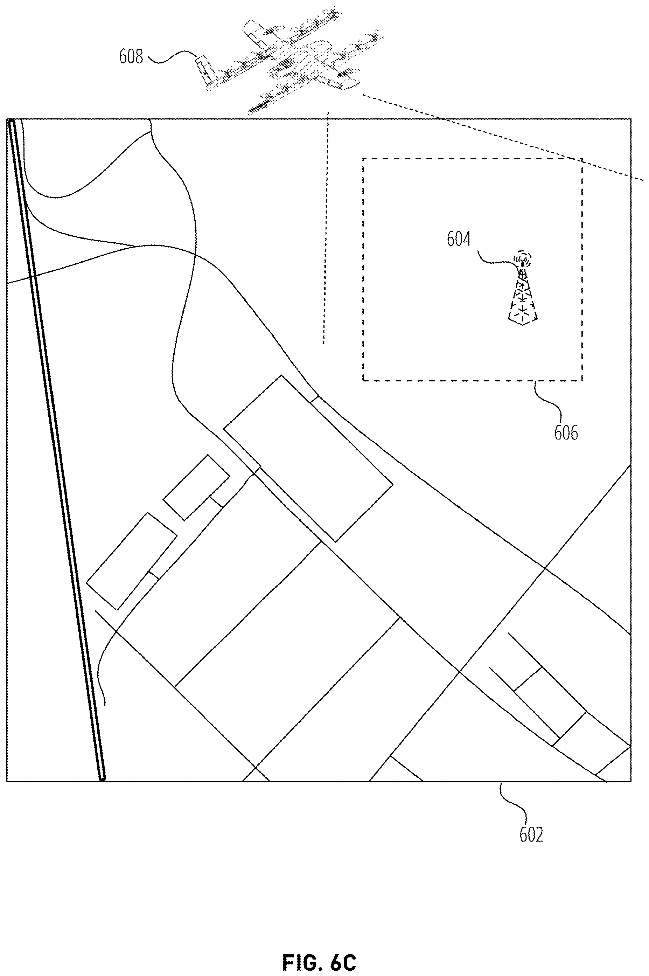

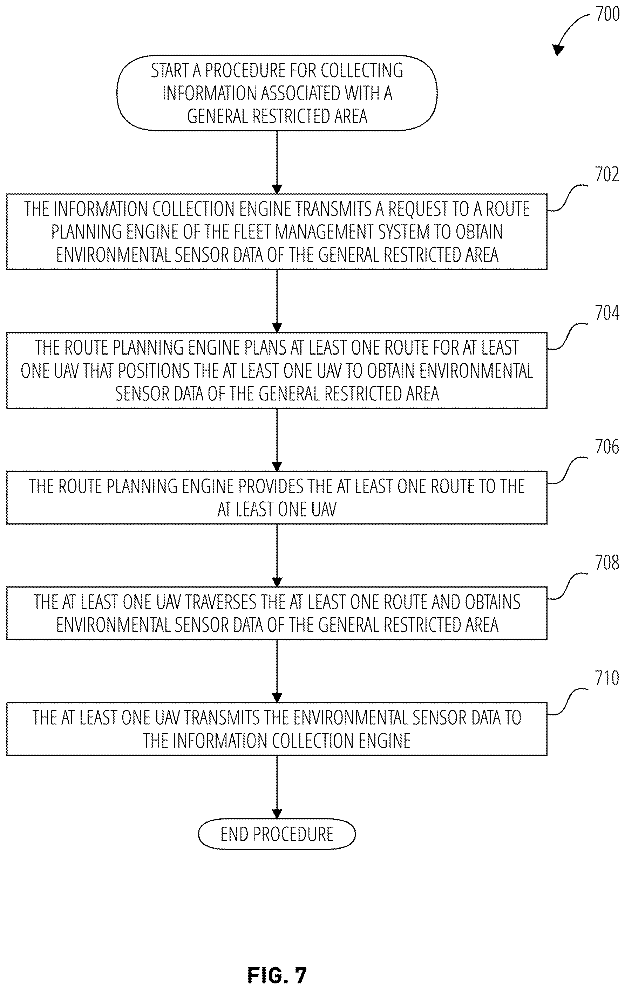

At subroutine block 504, an information collection engine 418 of the fleet management system 402 collects information associated with the general restricted area. In some embodiments, the definition of the general restricted area specifies a type of information to be collected that is associated with the general restricted area, and any suitable technique may be used to collect the information. For example, if the type of information to be collected is location information of a structure, environmental sensor data may be collected from the general restricted area using any suitable technique. FIG. 6C is a schematic illustration that shows a UAV 608 obtaining environmental sensor data of the general restricted area 606, from which a precise location of the structure 604 may be determined. As another example, if the type of information to be collected is land use information within the general restricted area (for example, areas of the general restricted area that are single-family housing, commercial buildings, greenspace, water, or other types of land usage), the information collection engine 418 may retrieve the information associated with the general restricted area from a data store that manages the relevant information. A detailed example of a procedure suitable for use at subroutine block 504 is illustrated in FIG. 7 and discussed in further detail below.

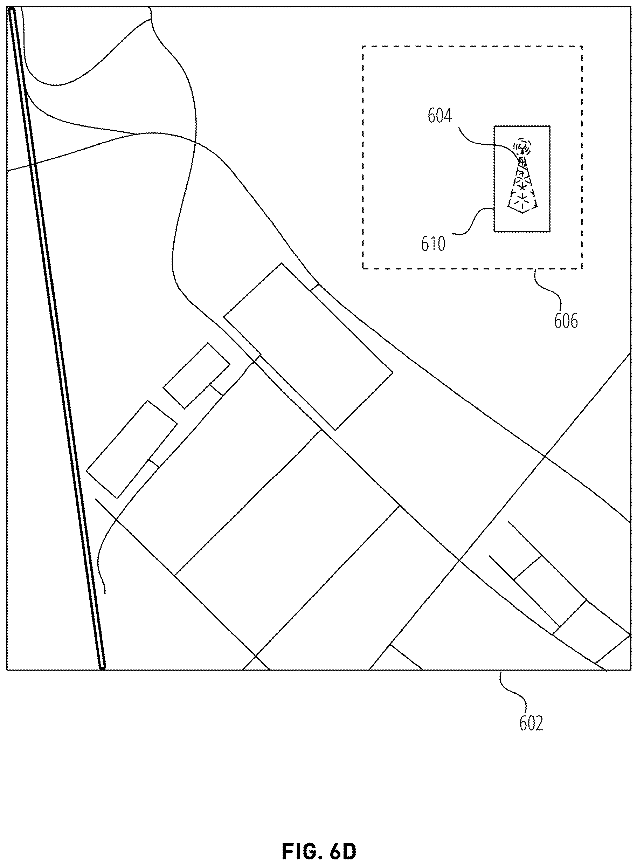

At block 506, the restriction determination engine 410 determines a specific restricted area based on the definition of the general restricted area and the collected information. The technique used by the restriction determination engine 410 to determine the specific restricted area depends on the type of collected information. For example, if the collected information is environmental sensor data that depicts a structure within the general restricted area, the restriction determination engine 410 may use photogrammetry techniques, triangulation techniques, structure-from-motion techniques, and/or other suitable techniques to process the environmental sensor data and associated positioning/attitude information from the UAV that collected the imagery to precisely determine the location and/or size of the structure. Once the precise location and/or size of the structure is known, then the restriction determination engine 410 may determine the specific restricted area by reference to the precise location and/or size of the structure (including but not limited to defining the specific restricted area based on the precise location and/or size of the structure plus a buffer amount specified in the definition of the general restricted area). FIG. 6D is a schematic illustration that shows the specific restricted area 610 determined based on the precise location of the structure 604 as determined from imagery and/or other environmental sensor data collected in FIG. 6C. As another example, if the collected information includes land use information and future planned routes for a fleet of autonomous vehicles, and the definition of the general restricted area indicates a proportion of a type of land use within the general restricted area to be restricted, then the restriction determination engine 410 may choose an optimal portion of the general restricted area of the type of land use that has a minimal effect on the future planned routes or predicted future destinations of the fleet of autonomous vehicles within the general restricted area.

In some embodiments, the specific restricted area may be based on the precise location and/or size of the structure (or other feature within the general restricted area) and aspects of an autonomous vehicle 300 to be controlled. That is, the size and/or shape of the specific restricted area may be determined based on one or more of a size, a maximum speed, a turning radius, and a payload capacity of an autonomous vehicle 300. For example, a specific restricted area for an autonomous vehicle 300 that is faster and has a larger turning radius may be larger than a specific restricted area for an autonomous vehicle 300 that is slower and has a smaller turning radius.

At block 508, the restriction determination engine 410 stores the specific restricted area in a restriction data store 416 of the fleet management system 402. The method 500 then proceeds to an end block and terminates.

Once stored in the restriction data store 416, the fleet management system 402 may provide access to the restricted areas for queries. For example, the route planning engine 412 may use the stored restricted areas as it is planning routes, such that routes can be planned and provided to autonomous vehicles 300 that will proactively avoid the restricted areas. As another example, the fleet management system 402 may receive telemetry from autonomous vehicles 300, and may check locations reported in the telemetry by the autonomous vehicles 300 against the restricted areas. If the fleet management system 402 detects that an autonomous vehicle 300 has entered a restricted area or is about to enter a restricted area, the fleet management system 402 may send commands to the autonomous vehicle 300 to take corrective action. As yet another example, the fleet management system 402 may provide the restricted areas to autonomous vehicles 300 so that the autonomous vehicles 300 may self-monitor and may autonomously take corrective action in response to determining that a restricted area has been entered.

In some embodiments, the techniques described above may be used for planning purposes. For example, a temporary structure may be desired to be erected in a geographic area. A size of the restricted area for the temporary structure may be provided to the fleet management system 402 as a desired size of a specific restricted area, and the geographic area in which the temporary structure is desired may be provided to the fleet management system 402 as the general restricted area. The method 500 may be used to determine an optimum placement for the temporary structure that minimally impacts operation of the fleet of autonomous vehicles, and the optimum placement may be provided as the specific restricted area. Once the temporary structure is erected, the method 500 can be used again to gather environmental sensor data to verify the location of the temporary structure and confirm or correct the location of the specific restricted area.

FIG. 7 is a flowchart that illustrates a non-limiting example embodiment of a procedure for collecting information associated with a general restricted area according to various aspects of the present disclosure. The procedure 700 is a non-limiting example of a procedure suitable for use at subroutine block 504 of method 500 as discussed above. In the procedure 700, the fleet management system 402 sends out at least one UAV 100 to collect environmental sensor data of the general restricted area.

From a start block, the procedure 700 proceeds to block 702, where the information collection engine 418 transmits a request to a route planning engine 412 of the fleet management system 402 to obtain environmental sensor data of the general restricted area. In some embodiments, the request may include types of environmental sensor data desired (including but not limited to one or more of overhead imagery, angled imagery, multi-spectral imagery, infrared imagery, and LIDAR scans). In some embodiments, the request may include the boundaries of the general restricted area to be sensed. In some embodiments, the request may include other aspects of the desired data collection (including but not limited to a time of day or time range in which the imagery should be collected, a date or date range during which the imagery should be collected, a desired resolution, and a desired color depth).

At block 704, the route planning engine 412 plans at least one route for at least one UAV 100 that positions the at least one UAV 100 to obtain environmental sensor data of the general restricted area. In some embodiments, the route planning engine 412 may determine a number of UAVs 100 for collecting the desired environmental sensor data within a desired time range or date range. In some embodiments, the route planning engine 412 may determine a number of UAVs 100 for covering the entirety of the general restricted area, based on capabilities (including but not limited to camera resolution, speed, operating altitudes, memory capacity, and battery capacity) of the UAVs 100. In some embodiments, the at least one route is planned to avoid other restricted areas and to allow the one or more UAVs 100 to obtain the desired environmental sensor data.

In some embodiments, the routes may include a stage in which the one or more UAVs 100 transit to the general restricted area from a base, a stage in which the one or more UAVs 100 collect environmental sensor data, and a stage in which the one or more UAVs 100 transit back to the base. During the stage in which the one or more UAVs 100 collect environmental sensor data, the route may cause the one or more UAVs 100 to operate in a racetrack pattern, a zig-zag pattern, a random pattern, a pattern that follows the shape of the general restricted area, or in any other suitable pattern. In some embodiments, the routes may include at least one route for a UAV 100 that is currently transiting a previous route to be re-routed to gather environmental sensor data from the general restricted area.

At block 706, the route planning engine 412 provides the at least one route to the at least one UAV 100. The route may be provided to the at least one UAV 100 using any suitable technique. For example, if a UAV 100 is in a base and coupled to a wired or wireless LAN, the route planning engine 412 may transmit the route to the UAV 100 via the LAN. Likewise, if the UAV 100 is coupled to the fleet management system 402 via another short-range communication technology, including but not limited to Bluetooth or USB, the route planning engine 412 may transmit the route to the UAV 100 via the short-range communication technology. As another example, the route planning engine 412 may store the route on a removable computer-readable medium such as a flash drive, and may provide the route to the UAV 100 via the removable computer-readable medium. As still another example, if a UAV 100 is currently transiting a route and is to be re-routed, the route planning engine 412 may transmit the route to the UAV 100 via a long-range wireless network such as a 4G network, a 5G network, or a satellite-based network.

At block 708, the at least one UAV 100 traverses the at least one route and obtains environmental sensor data of the general restricted area. In some embodiments, the at least one UAV 100 may traverse the at least one route and gather the environmental sensor data entirely autonomously. In some embodiments, the at least one UAV 100 may traverse a portion of the route autonomously, and may be remotely controlled by an operator for a portion of the route.

At block 710, the at least one UAV 100 transmits the environmental sensor data to the information collection engine 418. In some embodiments, the at least one UAV 100 may transmit the environmental sensor data to the information collection engine 418 while traversing the route via a long-range wireless network. In some embodiments, the at least one UAV 100 may transmit the environmental sensor data to the information collection engine 418 after completing the route and connecting to the fleet management system 402 via a wired LAN, a wireless LAN, or another short-range communication technology; or by swapping a removable computer-readable medium on which the at least one UAV 100 stored the environmental sensor data.

The procedure 700 then advances to an end block and terminates.

One will recognize that the procedure 700 illustrated in FIG. 7 is merely an example of a technique for collecting information associated with a general restricted area, and that some embodiments of the present disclosure may use different techniques. For example, to collect environmental sensor data of a general restricted area, the information collection engine 418 may query a data store to retrieve aerial imagery or other environmental sensor data of the general restricted area that has previously been collected. Further, as discussed above, other types of information may be retrieved from other types of data stores.

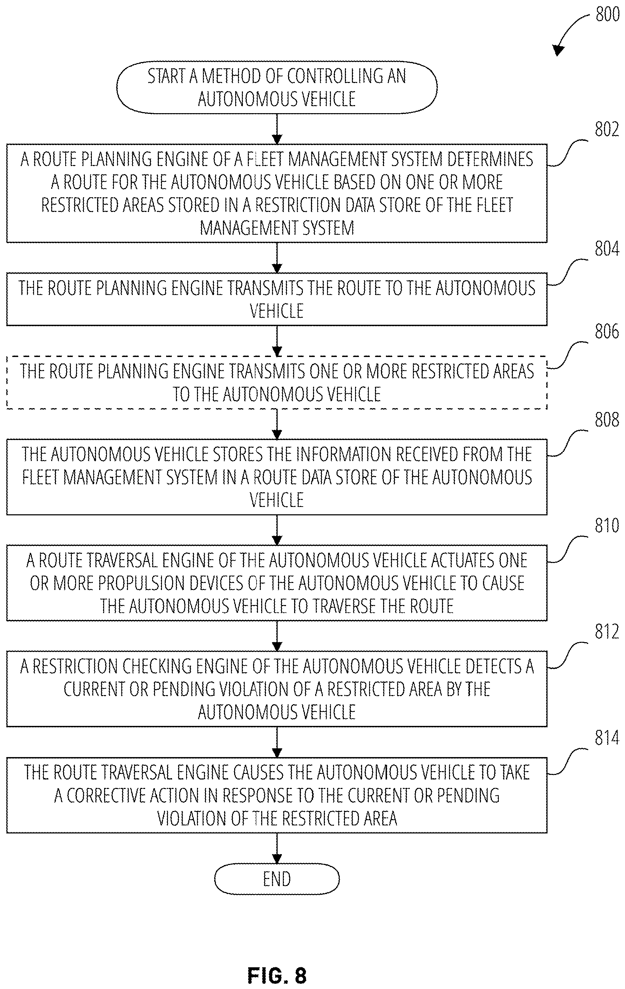

FIG. 8 is a flowchart that illustrates a non-limiting example embodiment of a method of controlling an autonomous vehicle according to various aspects of the present disclosure. In the method 800, a current or pending violation of a restricted area by an autonomous vehicle is detected, and corrective action is taken.

From a start block, the method 800 proceeds to block 802, where a route planning engine 412 of a fleet management system 402 determines a route for the autonomous vehicle 300 based on one or more restricted areas stored in a restriction data store 416 of the fleet management system 402. The restricted areas may be determined in any suitable way, including but not limited to using the method 500 discussed above. At block 804, the route planning engine 412 transmits the route to the autonomous vehicle 300. As discussed above, the route may be transmitted to the autonomous vehicle 300 via a wired or wireless LAN or other short-range communication technique, via a long-range wireless communication technology, via a removable computer-readable medium, or via any other suitable technique.

At optional block 806, the route planning engine 412 transmits one or more restricted areas to the autonomous vehicle 300. As with the route, the restricted areas may be transmitted to the autonomous vehicle 300 via a short-range communication technique, a long-range wireless communication technology, a removable computer-readable medium, or any other suitable technique. The actions of optional block 806 are optional because, in some embodiments, the autonomous vehicle 300 may not autonomously monitor compliance with restricted areas, but may instead receive commands or notifications from the fleet management system 402 when the fleet management system 402 determines that a restricted area is being violated based on telemetry received from the autonomous vehicle 300.

At block 808, the autonomous vehicle 300 stores the information received from the fleet management system 402 (the route and, optionally, the restricted areas) in a route data store 314 of the autonomous vehicle. At block 810, a route traversal engine 318 of the autonomous vehicle 300 actuates one or more propulsion devices 310 of the autonomous vehicle 300 to cause the autonomous vehicle 300 to traverse the route. The autonomous vehicle 300 may use one or more sensor devices 304 of the autonomous vehicle 300 to navigate through the route.

At block 812, a restriction checking engine 316 of the autonomous vehicle 300 detects a current or pending violation of a restricted area by the autonomous vehicle 300. In some embodiments, the restriction checking engine 316 may compare a position of the autonomous vehicle 300 obtained by a positioning sensor of the sensor devices 304 to the boundaries of the restricted areas stored in the route data store 314, and may detect a current violation of a restricted area when the position of the autonomous vehicle 300 is within one of the boundaries of the restricted areas. In some embodiments, the restriction checking engine 316 may use the current position of the autonomous vehicle 300 obtained by a positioning sensor, a current speed of the autonomous vehicle 300 obtained by one of the sensor devices 304, and a current direction of travel of the autonomous vehicle 300 obtained by one of the sensor devices 304 to determine if the current trajectory of the autonomous vehicle 300 is predicted to cause the autonomous vehicle 300 to cross a boundary of a restricted area (a pending violation).

At block 814, the route traversal engine 318 causes the autonomous vehicle 300 to take a corrective action in response to the current or pending violation of the restricted area. In some embodiments, the corrective action (e.g., change course to leave the restricted area; land as soon as possible) may be defined by the definition of the restricted area. In some embodiments, the corrective action may be chosen by the autonomous vehicle 300.

The method 800 then proceeds to an end block and terminates.

The method 800 describes an example in which the autonomous vehicle 300 independently detects that it is violating a restricted area. In some embodiments, the fleet management system 402 may detect that the autonomous vehicle 300 is violating a restricted area based on telemetry received from the autonomous vehicle 300, and may transmit a command to the autonomous vehicle 300 to take a specific corrective action. Accordingly, in some embodiments, a new restricted area may be created using the fleet management system 402 in order to cause a command to be transmitted to any autonomous vehicles 300 currently within the restricted area to take corrective action, such as landing, returning to base, diverting from the restricted area, or any other appropriate corrective action. In addition to taking corrective action, a similar technique may be used to transmit other types of commands to an autonomous vehicle 300 within an area specified via the techniques described above, including but not limited to only allowing the autonomous vehicle 300 within the restricted area to accept certain types of new autonomous missions (e.g., autonomous vehicles 300 within a disaster area only accepting disaster-recovery related missions).

In the preceding description, numerous specific details are set forth to provide a thorough understanding of various embodiments of the present invention. One skilled in the relevant art will recognize, however, that the techniques described herein can be practiced without one or more of the specific details, or with other methods, components, materials, etc. In other instances, well-known structures, materials, or operations are not shown or described in detail to avoid obscuring certain aspects.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The order in which some or all of the blocks appear in each method flowchart should not be deemed limiting. Rather, one of ordinary skill in the art having the benefit of the present disclosure will understand that actions associated with some of the blocks may be executed in a variety of orders not illustrated, or even in parallel.

The processes explained above are described in terms of computer software and hardware. The techniques described may constitute machine-executable instructions embodied within a tangible or non-transitory machine (e.g., computer) readable storage medium, that when executed by a machine will cause the machine to perform the operations described. Additionally, the processes may be embodied within hardware, such as an application specific integrated circuit ("ASIC") or otherwise.

The above description of illustrated embodiments of the invention, including what is described in the Abstract, is not intended to be exhaustive or to limit the invention to the precise forms disclosed. While specific embodiments of, and examples for, the invention are described herein for illustrative purposes, various modifications are possible within the scope of the invention, which is defined by the appended claims, as those skilled in the relevant art will recognize.

These modifications can be made to the invention in light of the above detailed description. Rather, the scope of the invention is to be determined entirely by the following claims.

## Claims

1. A method of optimizing a restricted area for autonomous vehicle operations, the method comprising:
receiving (502), by a fleet management system, a definition of a restricted area in which one or more autonomous vehicles are not allowed to operate, the definition specifying a general restricted area in which a structure or other feature to be avoided by autonomous vehicles of the fleet will be, but is not yet, present, wherein the definition of the restricted area is received via a user interface that accepts input from a user to define the general restricted area, wherein the the definition of the restricted area includes a start time for the restriction within the general restricted area;
collecting (504), by the fleet management system, additional information associated with the general restricted area to be used in reducing the size of the restricted area from the general restricted area to a specific restricted area that is within the general restricted area;
determining (506), by the fleet management system, the specific restricted area within the general restricted area based on the definition of the general restricted area and the collected additional information, wherein the additional information associated with the general restricted area includes environmental sensor data of the general restricted area, and wherein determining the specific restricted area based on the definition specifying the general restricted area and the collected additional information includes: (i) analyzing the environmental sensor data of the general restricted area to detect within the general restricted area the structure or other feature that is to be avoided by autonomous vehicles of the fleet, and (ii) determining the specific restricted area based on a location of the structure or other feature determined from the obtained environmental sensor data of the general restricted area; and
controlling, by the fleet management system, one or more autonomous vehicles based on the specific restricted area, wherein controlling one or more autonomous vehicles based on the specific restricted area includes updating one or more planned routes for one or more autonomous vehicles to avoid the specific restricted area.

2. The method of claim 1, wherein the user interface presents a map and accepts input for defining a general restricted area within the map.

3. The method of any preceding claim, wherein the definition of the general restricted area specifies a type of the additional information associated with the general restricted area to be collected.

4. The method of any preceding claim, wherein the definition of the general restricted area includes an indication of a remedy to take if an autonomous vehicle inadvertently enters the general restricted area.

5. The method of any preceding claim, wherein the definition of the general restricted area includes an indication that an autonomous vehicle that is within the general restricted area while it is created should divert course to leave the general restricted area.

6. The method of any preceding claim, wherein the definition of the general restricted area includes an end time for the restriction within the general restricted area.

7. The method of claim 1, wherein
determining the specific restricted area is also based on a size of the structure or other feature.

8. The method of claim 7, wherein collecting the additional information includes:
transmitting instructions to one or more autonomous vehicles to collect the environmental sensor data of the general restricted area.

9. The method of claim 1, wherein the size and/or shape of the specific restricted area is determined based on at least one of a size, a maximum speed, a turning radius, and a payload capacity of an autonomous vehicle.

10. The method of claim 1, wherein the one or more autonomous vehicles includes an aircraft.

11. The method of claim 10, wherein controlling one or more autonomous vehicles based on the specific restricted area includes causing the aircraft to land in response to detecting that the aircraft is within the specific restricted area.

12. A non-transitory computer-readable medium having logic stored thereon that, in response to execution by one or more processors of a computing device of a fleet management system, cause the fleet management system to perform the method of any one of claims 1 to 11.

## Patentansprüche

1. Verfahren zur Optimierung eines Beschränkungsgebiets für den Betrieb autonomer Fahrzeuge, wobei das Verfahren Folgendes umfasst:
Empfangen (502), durch ein Flottenmanagementsystem, einer Definition eines Beschränkungsgebiets, in dem ein oder mehrere autonome Fahrzeuge nicht betrieben werden dürfen, wobei die Definition ein allgemeines Beschränkungsgebiet angibt, in dem eine Struktur oder ein anderes Merkmal, das von autonomen Fahrzeugen der Flotte zu vermeiden ist, vorhanden sein wird, dies aber noch nicht ist, wobei die Definition des Beschränkungsgebiets über eine Benutzerschnittstelle empfangen wird, die Eingaben von einem Benutzer zur Definition des allgemeinen Beschränkungsgebiets akzeptiert, wobei die Definition des Beschränkungsgebiets einen Startzeitpunkt für die Beschränkung innerhalb des allgemeinen Beschränkungsgebiets beinhaltet;
Sammeln (504), durch das Flottenmanagementsystem, zusätzlicher Informationen im Zusammenhang mit dem allgemeinen Beschränkungsgebiet, die beim Verringern der Größe des Beschränkungsgebiets von dem allgemeinen Beschränkungsgebiet zu einem spezifischen Beschränkungsgebiet, das innerhalb des allgemeinen Beschränkungsgebiets liegt, zu verwenden sind;
Ermitteln (506), durch das Flottenmanagementsystem, des spezifischen Beschränkungsgebiets innerhalb des allgemeinen Beschränkungsgebiets basierend auf der Definition des allgemeinen Beschränkungsgebiets und den gesammelten zusätzlichen Informationen, wobei die zusätzlichen Informationen im Zusammenhang mit dem allgemeinen Beschränkungsgebiet Umgebungssensordaten des allgemeinen Beschränkungsgebiets beinhalten, und wobei das Ermitteln des spezifischen Beschränkungsgebiets basierend auf der Definition, die das allgemeine Beschränkungsgebiet angibt, und den gesammelten zusätzlichen Informationen Folgendes beinhaltet: (i) Analysieren der Umgebungssensordaten des allgemeinen Beschränkungsgebiets, um innerhalb des allgemeinen Beschränkungsgebiets die Struktur oder ein anderes Merkmal, das von autonomen Fahrzeugen der Flotte zu vermeiden ist, zu erkennen, und (ii) Ermitteln des spezifischen Beschränkungsgebiets basierend auf einem Standort der Struktur oder des anderen Merkmals, die bzw. das anhand der erhaltenen Umgebungssensordaten des allgemeinen Beschränkungsgebiets ermittelt wurde; und
Steuern, durch das Flottenmanagementsystem, eines oder mehrerer autonomer Fahrzeuge basierend auf dem spezifischen Beschränkungsgebiet, wobei das Steuern eines oder mehrerer autonomer Fahrzeuge basierend auf dem spezifischen Beschränkungsgebiet ein Aktualisieren einer oder mehrerer geplanter Routen für ein oder mehrere autonome Fahrzeuge, um das spezifische Beschränkungsgebiet zu vermeiden, beinhaltet.

2. Verfahren nach Anspruch 1, wobei die Benutzerschnittstelle eine Karte anzeigt und Eingaben zum Definieren eines allgemeinen Beschränkungsgebiets innerhalb der Karte akzeptiert.

3. Verfahren nach einem der vorhergehenden Ansprüche, wobei die Definition des allgemeinen Beschränkungsgebiets einen Typ der zusätzlichen Informationen angibt, die mit dem allgemeinen Beschränkungsgebiet assoziiert sind und gesammelt werden sollen.

4. Verfahren nach einem der vorhergehenden Ansprüche, wobei die Definition des allgemeinen Beschränkungsgebiets einen Hinweis auf eine Abhilfemaßnahme beinhaltet, die zu ergreifen ist, wenn ein autonomes Fahrzeug versehentlich in das allgemeine Beschränkungsgebiet eintritt.

5. Verfahren nach einem der vorhergehenden Ansprüche, wobei die Definition des allgemeinen Beschränkungsgebiets einen Hinweis beinhaltet, dass ein autonomes Fahrzeug, das sich innerhalb des allgemeinen Beschränkungsgebiets befindet, während dieses erstellt wird, seinen Kurs ändern sollte, um das allgemeine Beschränkungsgebiet zu verlassen.

6. Verfahren nach einem der vorhergehenden Ansprüche, wobei die Definition des allgemeinen Beschränkungsgebiets einen Endzeitpunkt für die Beschränkung innerhalb des allgemeinen Beschränkungsgebiets beinhaltet.

7. Verfahren nach Anspruch 1, wobei
das Ermitteln des spezifischen Beschränkungsgebiets auch auf einer Größe der Struktur oder eines anderen Merkmals basiert.

8. Verfahren nach Anspruch 7, wobei das Sammeln der zusätzlichen Informationen Folgendes beinhaltet:
Übertragen von Anweisungen an ein oder mehrere autonome Fahrzeuge zum Sammeln der Umgebungssensordaten des allgemeinen Beschränkungsgebiets.

9. Verfahren nach Anspruch 1, wobei die Größe und/oder die Form des spezifischen Beschränkungsgebiets basierend auf zumindest einem von einer Größe, einer maximalen Geschwindigkeit, einem Wenderadius und einer Traglast eines autonomen Fahrzeugs ermittelt wird.

10. Verfahren nach Anspruch 1, wobei das eine oder die mehreren autonomen Fahrzeuge ein Luftfahrzeug beinhalten.

11. Verfahren nach Anspruch 10, wobei das Steuern eines oder mehrerer autonomer Fahrzeuge basierend auf dem spezifischen Beschränkungsgebiet ein Veranlassen des Luftfahrzeugs zum Landen in Reaktion auf ein Erkennen beinhaltet, dass sich das Luftfahrzeug innerhalb des spezifischen Beschränkungsgebiets befindet.

12. Nichtflüchtiges computerlesbares Medium mit darauf gespeicherter Logik, die, in Reaktion auf eine Ausführung durch einen oder mehrere Prozessoren eines Computergeräts eines Flottenmanagementsystems, das Flottenmanagementsystem veranlasst, das Verfahren nach einem der Ansprüche 1 bis 11 durchzuführen.

## Revendications

1. Procédé d'optimisation d'une zone restreinte pour des opérations de véhicules autonomes, le procédé comprenant :
la réception (502), par un système de gestion de flotte, d'une définition de zone restreinte dans laquelle un ou plusieurs véhicules autonomes ne sont pas autorisés à fonctionner, la définition spécifiant une zone restreinte générale dans laquelle une structure ou autre caractéristique à éviter par des véhicules autonomes de la flotte sera, mais n'est pas encore, présente, dans laquelle la définition de la zone restreinte est reçue via une interface utilisateur qui accepte une entrée d'un utilisateur pour définir la zone restreinte générale, la définition de la zone restreinte comprenant un instant de début pour la restriction dans la zone restreinte générale ;
la collecte (504), par le système de gestion de flotte, d'informations supplémentaires associées à la zone restreinte générale à utiliser pour réduire la taille de la zone restreinte de la zone restreinte générale à une zone restreinte spécifique qui se trouve dans la zone restreinte générale ;
la détermination (506), par le système de gestion de flotte, de la zone restreinte spécifique dans la zone restreinte générale sur la base de la définition de la zone restreinte générale et des informations supplémentaires collectées, les informations supplémentaires associées à la zone restreinte générale comprenant des données de capteurs environnementaux de la zone restreinte générale, et la détermination de la zone restreinte spécifique sur la base de la définition spécifiant la zone restreinte générale et des informations supplémentaires collectées comprenant : (i) l'analyse des données de capteurs environnementaux de la zone restreinte générale pour détecter, dans la zone restreinte générale, la structure ou autre caractéristique qui doit être évitée par des véhicules autonomes de la flotte, et (ii) la détermination de la zone restreinte spécifique sur la base d'un emplacement de la structure ou d'une autre caractéristique déterminée à partir des données de capteurs environnementaux obtenues de la zone restreinte générale ; et le contrôle, par le système de gestion de flotte, d'un ou plusieurs véhicules autonomes sur la base de la zone restreinte spécifique, dans laquelle le contrôle d'un ou de plusieurs véhicules autonomes sur la base de la zone restreinte spécifique comprend la mise à jour d'un ou de plusieurs itinéraires planifiés pour un ou plusieurs véhicules autonomes afin d'éviter la zone restreinte spécifique.

2. Procédé selon la revendication 1, dans lequel l'interface utilisateur présente une carte et accepte une entrée pour définir une zone restreinte générale à l'intérieur de la carte.

3. Procédé selon l'une quelconque des revendications précédentes, dans lequel la définition de la zone restreinte générale spécifie un type d'informations supplémentaires associées à la zone restreinte générale à collecter.

4. Procédé selon l'une quelconque des revendications précédentes, dans lequel la définition de la zone restreinte générale comprend une indication d'une mesure corrective à prendre si un véhicule autonome entre par inadvertance dans la zone restreinte générale.

5. Procédé selon l'une quelconque des revendications précédentes, dans lequel la définition de la zone restreinte générale comprend une indication qu'un véhicule autonome qui se trouve à l'intérieur de la zone restreinte générale pendant que celle-ci est créée doit dévier sa course pour quitter la zone restreinte générale.

6. Procédé selon l'une quelconque des revendications précédentes, dans lequel la définition de la zone restreinte générale comprend un instant de fin pour la restriction à l'intérieur de la zone restreinte générale.

7. Procédé selon la revendication 1, dans lequel la détermination de la zone restreinte spécifique est également basée sur une taille de la structure ou autre caractéristique.

8. Procédé selon la revendication 7, dans lequel la collecte des informations supplémentaires comprend : la transmission d'instructions à un ou plusieurs véhicules autonomes pour collecter les données de capteurs environnementaux de la zone restreinte générale.

9. Procédé selon la revendication 1, dans lequel la taille et/ou la forme de la zone restreinte spécifique est déterminée sur la base de l'au moins un parmi : une taille, une vitesse maximale, un rayon de virage et une capacité de charge utile d'un véhicule autonome.

10. Procédé selon la revendication 1, dans lequel le ou les véhicules autonomes comprennent un aéronef.

11. Procédé selon la revendication 10, dans lequel le contrôle d'un ou plusieurs véhicules autonomes sur la base de la zone restreinte spécifique comprend le fait d'amener l'aéronef à atterrir en réponse à la détection du fait que l'aéronef se trouve à l'intérieur de la zone restreinte spécifique.

12. Support non transitoire lisible par ordinateur ayant une logique stockée sur celui-ci qui, en réponse à l'exécution par un ou plusieurs processeurs d'un dispositif informatique d'un système de gestion de flotte, amène le système de gestion de flotte à réaliser le procédé selon l'une quelconque des revendications 1 à 11.
